Europäisches Patentamt

European Patent Office

Office européen des brevets

(11) Publication number: **0 608 577 A1**

# EUROPEAN PATENT APPLICATION

(21) Application number: **93200224.9**

(22) Date of filing: **28.01.93**

(51) Int. Cl.5: **H04L 27/20**

(43) Date of publication of application:
**03.08.94 Bulletin 94/31**

(84) Designated Contracting States:
**AT BE CH DE DK ES FR GB GR IE IT LI LU MC NL PT SE**

(71) Applicant: **BELL TELEPHONE MANUFACTURING COMPANY Naamloze Vennootschap**
**Francis Wellesplein 1**
**B-2018 Antwerp(BE)**

(72) Inventor: **Sevenhans, Joannes Mathilda Josephus**

Prins Kavellei 126
B-2930 Brasschaat(BE)
Inventor: **Reusens, Peter Paul Frans**
Warande 121
B-9270 Laarne(BE)

(74) Representative: **Vermeersch, Robert et al**
**BELL TELEPHONE MANUFACTURING COMPANY**
**Naamloze Vennootschap**
**Patent Department**
**Francis Wellesplein 1**
**B-2018 Antwerpen (BE)**

(54) GMSK modulator with automatic calibration.

(57) I and Q modulating signals are generated, in a baseband processing unit (MODU), and fed to a phase modulator (IPM,QPM,SM). By generating known test signals, the power of the transmitted signal (OUT) can be used to detect dc offsets, quadrature errors and I/Q imbalance. These three sorts of error are corrected sequentially, with three separate control loops, and generating three separate control signals (CAS,IOAS/QOAS,IS/QS). The three control loops share a common power detector (PD), thus reducing the chip area required.

FIG.1

The present invention relates to a modulator with a modulator input to which an input signal is applied and with a modulator output on which a modulated output signal is provided, said modulator including:

- a signal generator generating from said input signal a plurality of modulating signals,
- a modulator arrangement with a plurality of modulator circuits and an adder circuit, said modulator circuits modulating respective ones of said modulating signals on respective carrier signals thereby producing modulated intermediate signals, said adder circuit adding said intermediate signals thereby producing said modulated output signal, and,
- at least one negative feedback control loop including between said modulator output and a regulating input thereof a power measurement circuit providing a power measurement value and a comparator means for comparing said power measurement value with a reference value and providing a regulating error signal on said regulating input.

Such a modulator is already known in the art, e.g. from the article "BBTRX: a baseband transceiver for a zero IF GSM hand portable station", D. Haspeslagh et al., Custom Integrated Circuits Conference, Boston, 1992. Therein, the output of the adder circuit is coupled to the modulator output via a power amplifier and the regulating input of the control loop which is shown in detail in Figure 3, is coupled to this amplifier and used to tune the gain thereof. In this way the output power is tuned to a reference value despite temperature effects and variations in supply voltage.

This known modulator is used in a transmitter of a mobile communication system operating according to the well known GSM standard wherein use is made of the well known Gaussian Minimum Shift Keying GMSK which produces a constant envelope modulated output signal. The signal generator circuit generates two distinct but related modulating signals, two modulator circuits are provided each including a multiplier for multiplying such a modulating signal with a respective one of two sinusoidal carrier signals shifted in phase over 90 degrees and the adder circuit adds the multiplied signals to provide the modulated output signal.

The performance of such a modulator is dependent on the transfer function of the modulator circuits. GMSK can indeed be viewed as a form of quadrature amplitude modulation which produces a modulated signal in which the carrier signal and one of the sidebands are suppressed which is commonly known as carrier and image rejection. This rejection can only be achieved when the two mentioned modulator circuits have transfer functions with predetermined characteristics. It is for instance mandatory that they do not generate DC offset into the multipliers as such offset inevitably causes a pure carrier signal to be present in the modulated output signal. Such an insufficient suppression of carrier and sideband leads to a distorted modulated signal and to performance degradation of the communication system.

It is to be noted that such tuning of individual transfer functions is needed in any quadrature amplitude modulation method to ensure that the right modulated output signal is generated. In known modulators this tuning consists in trimming these transfer functions by external circuitry after manufacture. However, external trimming is both expensive and time consuming. On the other hand, when the trimming circuit is added to the modulator itself, it increases considerably the volume and complexity thereof and this conflicts for instance with its use in a hand-held terminal.

An object of the present invention is therefore to provide a modulator of the above known type but wherein the desired tuning is obtained in a less expensive and less time consuming way whilst adding as little circuitry as possible.

According to the invention this object is achieved due to the fact that said signal generator is controlled so as to produce at least one predetermined set of modulating signals which give rise in said modulator to a power measurement value which is function of a corresponding tunable characteristic of the transfer function of at least one of said modulator circuits and that said regulating input is coupled to a regulating means forming part of said one modulator circuit to tune said characteristic of the transfer function thereof to said reference value.

The invention is based on the insight that, by applying a predetermined set of modulating signals, the characteristic to be tuned can be made observable in the power measurement value. This value can then obviously be used in a negative feedback control loop to tune this characteristic without requiring external trimming.

In comparison with the prior art, the above features moreover allow the power measurement circuit to be shared among at least one negative feedback control loop tuning a characteristic of the transfer function and the power control loop mentioned above. This power measurement circuit can furthermore be shared among control loops tuning any characteristic which can be made observable in the power measurement value, and a plurality of such characteristics are described below.

The present invention, in giving a possibility to reuse the power measurement circuit for the automatic tuning of the mentioned transfer functions, makes such automatic tuning a viable option since the added circuitry increases the complexity and volume of the modulator relatively little. In general, the measurement circuit is indeed already provided to control the transmit power and is generally the most complex and bulky part of the control loop since the greater part of the remaining circuits of this loop may be incorporated in relatively simple and small digital control logic.

It is to be noted that the above tuning is restricted to off-line tuning,i.e. tuning when the modulator is idle. The best way to perform this tuning will then consist consists in dissipating the energy produced during the tuning process in an equivalent load, for instance an appropriate stub replacing the antenna. In this way it is avoided that this energy would be radiated through the antenna thus possibly disturbing the communication system in which the modulator is used.

An important feature of the present invention is that said predetermined set consists of zero modulating signals which give rise to a power measurement value which is a function of the offset characteristic of the transfer function of said one modulator circuit and that said regulating input is coupled to a summing circuit forming part of said one modulator circuit, said summing circuit forming part of said regulating means and being used to add an offset regulating error signal, provided by said control loop on said regulating input and based on a zero reference value, to a signal produced in said one modulator circuit.

In the above way the offset generated by in a modulator circuit is cancelled requiring only one summing circuit. As mentioned above, such offset is unallowable in a modulator which is for instance used in the above GSM mobile communication system as it causes the modulated signal to include the carrier signal itself which distorts. This distorts the modulated signal and degrades performance.

Further features of a modulator of the latter type are that said plurality of modulator circuits comprises an in-phase and a quadrature-phase modulator circuit, that said plurality of modulating signals comprises an in-phase and a quadrature-phase modulating signal which are applied to said in-phase and said quadrature-phase modulator circuit respectively, and that a second predetermined set also consists of zero modulating signals which give rise to a power measurement value which is a function of the offset characteristic of the transfer function of the other modulator circuit and that said regulating means further includes a second summing circuit which forms part of said other modulator circuit and to which a second regulating input is coupled, said second summing circuit being used to add a second regulating error signal, provided by said control loop on said second regulating input, and based on a zero reference value, to a signal produced in said other modulator circuit, and that said control loop is controlled to alternately tune the transfer function of said in-phase and quadrature-phase modulator circuits via said first and second summing circuits respectively, and that said control loop is controlled to tune another transfer function whenever said power measurement value increases with an increase in the amplitude of the presently considered offset regulating error signal.

By cancelling the offset in the two modulator circuits, the carrier signal is substantially completely rejected or suppressed. This has to be done via two summing circuits as these offsets independently create the presence of the carrier signal in the modulated output signal.

By alternating between the cancellation of the offset created by the two modulator circuits a better carrier rejection is obtained. Indeed, theoretically if one offset contribution is so tuned that it is negligible with respect to the other contribution no significant further improvement can be obtained by further tuning its corresponding modulator circuit. However, such improvement can, as a rule, still be obtained after this other contribution is likewise cancelled to a larger extent and it can thus be appreciated that such alternation leads to a greater dynamic range of the control loop with regards to the offset cancellation.

A further important characteristic of the modulator is that said predetermined set consists of a fixed amplitude signal applied to said one modulator circuit and zero signals applied to other modulator circuits and gives rise to a power measurement value which is a function of the gain characteristic of the transfer function of said one modulator circuit and that said regulating input is coupled to a gain adjustment circuit included in said regulating means being used to adjust the gain of an amplifier included in said one modulator circuit via a gain regulating error signal, provided by said control loop on said regulating input and based on a reference value corresponding to the power measurement value corresponding to said fixed amplitude signal and a desired gain, and that said modulator is adapted to measure said desired gain as said power measurement value in response to a set of modulating signals consisting of said fixed amplitude signal applied to the other modulator circuit and a zero signal applied to said one modulator circuit and that said fixed amplitude signal is a DC-signal.

In this way the gains of the two modulator circuits are balanced, i.e. made equal, this being a necessary condition for realizing the above mentioned suppression of one of the sidebands, also known as image rejection. Indeed, this suppression consists in the cancellation in the adder circuit of corresponding frequency bands present in the in-phase and quadrature-phase output signals of the like named modulator circuits, each of the latter output signals comprising two distinct frequency bands due to the multiplication with the sinusoidal carrier signal. This cancellation can only be achieved if two necessary conditions are fulfilled, a first condition being that the signals in the mentioned corresponding frequency bands have equal amplitudes and a second that these signals have opposite signs.

It can be clearly seen that the above features allow a very simple tuning of the transfer functions to fulfil the first necessary condition, i.e. equal amplitudes in the frequency bands before they are summed in the adder circuit. Indeed, with equal gains and equal modulating signal amplitudes in the two modulator circuits the latter condition is clearly met.

Yet another important characteristic of the modulator is that said in-phase and quadrature-phase modulator circuits each include multiplier means for multiplying their respective input signals with an in-phase and quadrature-phase carrier signal respectively, said carrier signals having a same carrier frequency and a mutual phase shift of substantially 90 degrees, and that said predetermined set consists of modulating signals having equal absolute values and gives rise to a power measurement value which is a function of the mutual phase shift characteristic of the transfer function of both said modulator circuits and that said regulating input is coupled to a phase adjustment circuit forming part of said regulating means and being used to change said mutual phase shift via a phase regulating error signal, provided by said control loop.

It can be verified that the above mentioned second necessary condition is only met if the signals summed in the adder circuit are in perfect quadrature which in turn requires a phase shift of exactly 90 degrees between both the signals applied to the multipliers and the sinusoidal carrier signals with which the latter signals are multiplied.

In the above described way the last mentioned phase shift, which is the most important of the above mentioned phase shifts with regard to the actual image rejection, may be tuned to the desired 90 degrees in a very simple way. This tuning, which requires this phase shift to be observable in the power of the modulated output signal, is made possible by choosing the above mentioned predetermined set of modulating signals. Indeed, this inventive feature is based on the insight that in applying such a predetermined set to the modulator circuits the modulated output signal will be an amplitude modulated signal with a specific peak amplitude which is a direct function of the last mentioned phase shift. This peak amplitude is also verifiably a direct function of the power of such an amplitude modulated signal and can even be used itself as a measure for this power.

From the above it also follows that a value can be calculated which would equal the power measurement value if with the above predetermined set a phase shift of exactly 90 degrees were present. Such a calculated value can serve as the basis for a reference value which has to be chosen corresponding to this calculated value so as to lead to an adjustment diminishing the deviation of the phase shift with respect to the mentioned 90 degrees.

A feature of a modulator of the latter type is that said modulating signals are alternately controlled to equal said last mentioned predetermined set and a further predetermined set in which one of the signals of said last mentioned predetermined set has its sign inverted, and that said reference value is said power measurement value at the end of a previous alternation.

In this way the procedure to tune the phase shift can both be very simple and very accurate. The two mentioned sets of signals, for instance sinusoids with a phase shift of either 0 or 180 degrees or DC signals with equal or opposite signs, both lead to an amplitude modulated signal but the peak amplitude thereof is for a particular phase mismatch in the first case smaller than the exact value whilst it is in the other case larger than this exact value.

Such a procedure is therefore very simple as the reference value can simply be chosen as the previously detected power measurement value, due to the fact that equal peak amplitudes for both predetermined sets automatically imply a phase shift of 90 degrees. This procedure also is very accurate due to the fact that it requires no absolute, calculated reference value which has to take into consideration the responses of the power amplifier and measurement circuit but instead relies on the matching of two measurements. Indeed, eliminating the need for a calculated reference value improves the accuracy due to the fact that the mentioned responses are hard to characterize.

It is moreover to be noted that in the above way the exact responses of the amplifier and measurement circuit are immaterial to the total tuning process so that they can be advantageously chosen to suit the characteristics of the power loop without this choice being constrained by the tuning requirements.

The invention finally also relates to a quadrature signal generation means adapted to be used in a modulator of the latter type and deriving said carrier signals from a master carrier signal, having said carrier frequency, by applying said master signal to two parallel branches, a first branch including an in-phase filter and amplifier deriving a first amplified signal substantially shifted over 45 degrees and a second branch including a quadrature-phase filter and amplifier deriving a second amplified signal substantially shifted over -45 degrees.

Known quadrature signal generation means derive the desired in-phase and quadrature-phase carrier signals in the above way. This known generation means is a straightforward implementation using two filters, e.g. RC filters, each deriving a share of the required phase shift.

Such filters however do not themselves allow to determine this phase shift with sufficient accuracy leading to the need for the tuning or trimming of this phase shift.

A possible method for tuning this phase shift is disclosed in the article "A 270-kb/s 35-mW modulator IC for GSM Cellular Radio hand-held terminals", JJ. Haspeslagh et al., IEEE Journal of solid-state circuits, vol. 25, no. 6, december 1990. In Fig. 6 hereof a part of the signal generator is shown wherein it is possible to feed in a phase offset PO to the quadrature-phase modulating signal. This phase offset will be present in the latter modulating signal when applied to its corresponding multiplier and after the multiplication it is indiscernible whether this phase offset was applied to the modulating signal or to the quadrature-phase carrier signal. It therefore follows that in this known way the phase shift between the carrier signals can be tuned.

This known and indirect method of adjusting the phase shift cannot be used in a modulator of the above type since this modulator requires a specific set of modulating signals to be applied to the modulator circuit and the above method requires these modulating signals to be changed themselves. Moreover would a direct compensation via the quadrature signal generation means be less complex. This is particularly but not exclusively desirable in a modulator according to the present invention.

A further object of the present invention therefore is to propose a quadrature signal generation means of the above known type but wherein the phase shift can be directly controlled in a simple way.

This object is achieved due to the fact that said quadrature signal generation means further includes an in-phase and a quadrature-phase adjust summing circuit for adding respectively said first amplified signal with a first signal dependent upon said phase adjust signal and the output of said quadrature-phase filter and said second amplified signal with a second signal dependent upon said phase adjust signal and the output of said in-phase filter, and that said in-phase and quadrature phase carrier signals are the outputs of said in-phase and quadrature-phase adjust summing circuits respectively, and that said first and second signals are derived by in-phase and quadrature-phase adjust mixers to which said phase adjust signal and a respective one of said filter output signals are applied.

The above is based on the insight that an output of the filter can be used as a correction signal to change the phase of a larger sinusoidal carrier signal at the output of the amplifier coupled to the other filter since these signals are already substantially orthogonal due to both filters. By changing the amplitude and sign of this correction signal dependent upon the value of the phase adjust signal the phase shift between the two carrier signals can verifiably be increased or decreased.

By establishing the dependency via the mentioned adjust mixers a very simple tunable generation means is provided since the sign of the phase shift will without further ado determine the direction in which the phase shift will be tuned and since its amplitude directly controls the amount with which the phase shift is tuned.

The above mentioned and other objects and features of the invention will become more apparent and the invention itself will be best understood by referring to the following description of an embodiment taken in conjunction with the accompanying drawings wherein :

Fig. 1 shows a schematic diagram of a modulator according to the present invention, and
Fig. 2 represents a quadrature signal generation means QGM which forms a part of the modulator shown in Fig. 1.

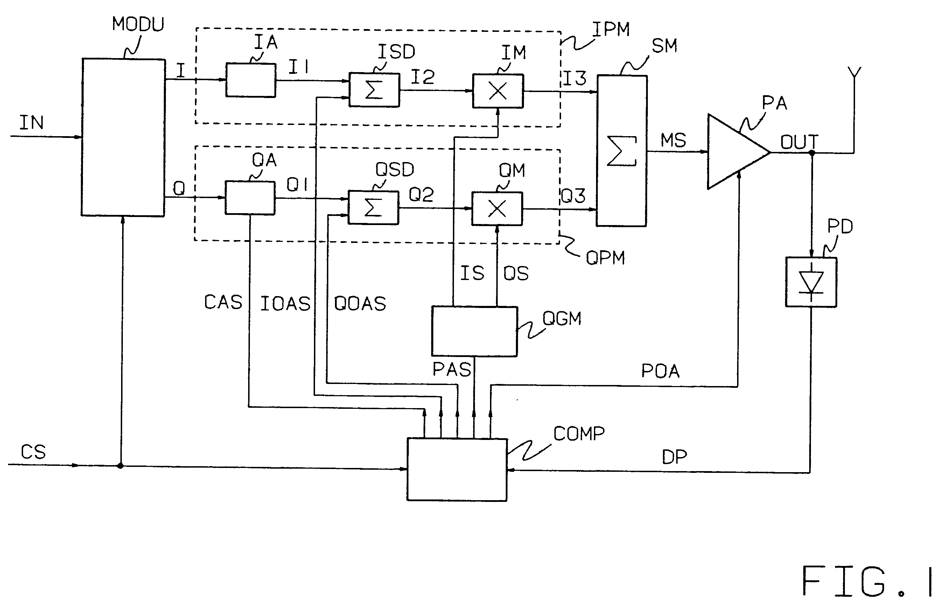

The modulator shown in Fig. 1 forms part of a hand-held terminal of a mobile communication system operating according to the well known pan-European GSM standard. It provides at its output terminal OUT a like named modulated output signal OUT which is derived from a digital input signal IN which is applied to a like named modulator input terminal IN.

In detail, the digital input signal IN is applied to a signal generator circuit MODU which derives from this input signal IN in-phase and quadrature-phase modulating signals I and Q respectively, according to the Gaussian Minimum Shift Keying GMSK modulation method used in accordance with the above defined standard. This signal generator MODU is for instance of the type described in detail in the article "A 270-kb/s 35-mW modulator IC for GSM Cellular Radio hand-held terminals", J. Haspeslagh et al., IEEE Journal of solid-state circuits, vol. 25, no. 6, December 1990 and referred to as "modulator IC" therein.

The modulating signals I and Q are applied to an in-phase modulator circuit IPM and a quadrature-phase modulator circuit QPM respectively. The respective outputs of the latter circuits, I3 and Q3, are summed by an adder circuit SM thereby producing a modulated signal MS. The latter modulated signal MS is then applied to a power amplifier PA which amplifies this signal and so produces the modulated output signal OUT. The latter signal is applied to a symbolically represented antenna via which it is transmitted to a base station (not shown) of the GSM system.

Before describing the modulator circuits IPM and QPM in more detail, it is to be noted that they generally include a number of components not shown in Fig. 1. The design of these components is however well within the capabilities of a person skilled in the art and therefore only those components vital to the present invention are discussed in detail hereafter.

The modulator circuits IPM and QPM each comprise the series connection of an amplifier IA/QA providing a first intermediate signal I1/Q1 which is applied together with an offset correction signal IOAS/QOAS to a summing circuit ISD/QSD which generates a second intermediate signal I2/Q2. The latter signal is finally applied to a multiplier IM/QM which multiplies the second intermediate signals I2/Q2 with a respective sinusoidal carrier signal IS/ QS thereby producing the mentioned output signal of the modulator circuit I3/Q3.

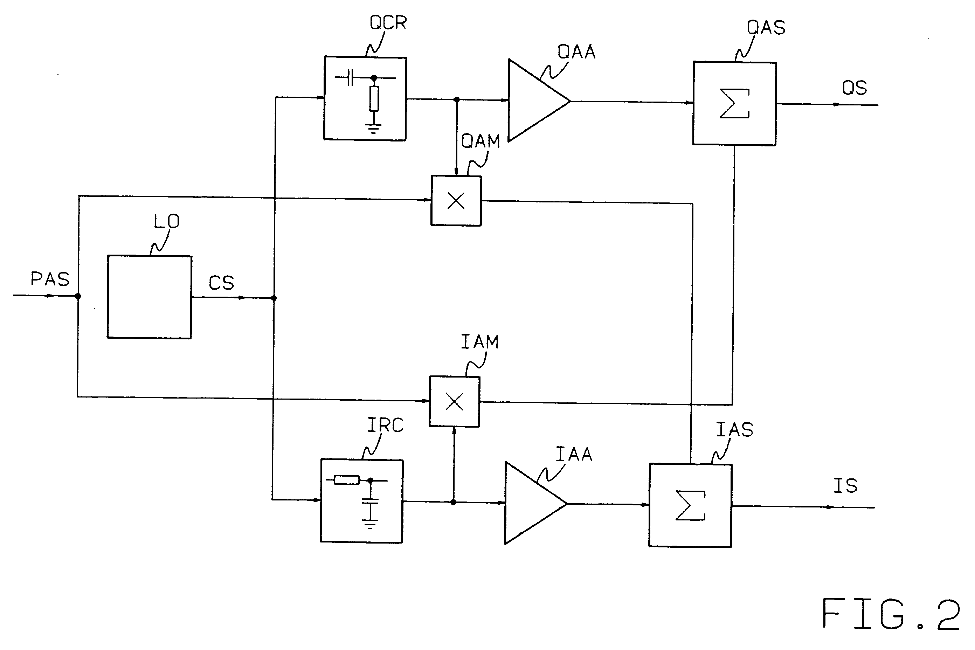

The carrier signals IS and Q are generated by a quadrature signal generation means QGM and described in detail with reference to Fig. 2 and are sinusoids having a same frequency but shifted in phase with respect to each other over 90 degrees, i.e. IS and QS are in quadrature. As will be also described with reference to Fig. 2 the phase shift between IS and QS is controlled by a phase adjust signal PAS provided by a comparator circuit COMP whose operation is controlled by a control signal CS originating from the controller of the hand-held terminal (not shown) as explained below.

The modulator further includes a power measurement circuit PD connected to the output terminal OUT and providing a power measurement value DP indicative of the power of the modulated output signal OUT. This value is applied to a like named terminal DP of the comparator circuit COMP. The power measurement circuit is for example a peak detecting diode or a radio frequency rectifier of a type well known in the art. The latter circuit PD and the comparator circuit COMP both form part of a negative feedback control including a plurality of negative feedback control loops, as described hereafter. Each of these control loops is dedicated to the tuning of a distinct characteristic of the modulated output signal OUT and comprises a part which is common to all control loops and which includes PD and COMP, and a distinct regulation circuit for regulating the corresponding distinct characteristic.

A first control loop is a power control loop comprising the power amplifier PA, the measurement circuit PD, the comparator circuit COMP and a regulating terminal POA via which a like named regulating power error signal POA is applied to the power amplifier PA. Under the control of the control signal CS, this control loop is activated during a transmit burst, as required by the above mentioned GSM standard. COMP then produces the error signal POA which is a function of the difference between the power measurement value DP and a reference value applied to COMP under the control of CS, as described in detail later.

The separate regulation circuits of the other control loops are briefly described hereafter, they are active when COMP is controlled by CS to tune a corresponding characteristic.

The regulation circuits of second and third control loops are the summing circuits ISD and QSD respectively and these circuits cancel the offset generated by the modulator circuits IPM and QPM respectively. This cancellation is achieved by adding DC correction or offset regulating error signals IOAS and QOAS to the intermediate signals I1 and Q1 respectively via the corresponding summing circuits IS and QS. These error signals IOAS and QOAS which are generated by COMP are based on the difference of the power measurement value DP and a zero reference value. For the offset cancellation, the signal generator MODU applies, under the control of CS, a predetermined set consisting of zero modulating signals I and Q to IPM and QPM respectively.

A fourth control loop includes as regulation circuit the quadrature-phase amplifier QA and is used to tune the gain of the quadrature-phase modulator circuit QPM. The latter tuning is achieved by adjusting the gain of QA by means of a gain adjust error signal GAS which is generated by COMP under the control of CS and is function of the difference of the power measurement value DP and a reference value which corresponds to the gain of the in-phase modulator circuit IPM as will be described below. The mentioned power measurement value DP is in this case produced when the signal generator MODU, under the control of CS, applies a corresponding predetermined set consisting of a zero I-signal and a DC Q signal with fixed amplitude to IPM and QPM respectively.

A fifth control loop includes the quadrature signal generation means QGM as regulation circuit and is used to tune the phase shift between the sinusoidal carrier signals IS and QS to substantially 90 degrees. Such tuning is achieved by means of a phase adjust error signal PAS applied to QGM and generated by COMP under the control of CS and requires a corresponding predetermined set of modulating signals I and Q, described in detail below, to be generated by MODU under the control of CS. In order for the mentioned phase shift to be tuned directly via QGM, QGM is conceived in the way described in detail with reference to Fig. 2.

The control signal CS, the signal generator MODU and the comparator circuit COMP will be described in more detail hereafter.

The comparator circuit COMP as shown in Fig. 1 is shared between all control loops and it therefore has to be controlled by CS in such a way that it performs the right comparison with the right reference value at the moment a specific error signal is required by a specific control loop. During every transmit burst for instance CS has to control COMP to perform the comparison required for the power control loop. COMP can for this purpose be conceived as comprising a digital logic circuit, an analog-to-digital convertor connected to the power measurement value DP and a digital-to-analog convertor connected to the distinct error signals which are produced by it. Such a digital logic circuit can be designed by a skilled person so that it performs the right comparison, under the control of CS, retrieving the corresponding reference values from an associated memory.

Furthermore, CS has to perform a similar control of MODU since during the activation of a particular control loop dedicated to the tuning of a characteristic of the transfer functions of a modulator circuit, MODU has to produce predetermined modulating signals I/Q which correspond to this particular control loop as mentioned above. This can be achieved if the sine and cosine lookup tables described in the above referenced article by J. Haspeslagh include the data needed to generate these predetermined signals and if CS indicates which of these signals is to be generated at which moment. It can be appreciated that in this way the control of COMP and MODU can be easily synchronized via the control signal CS.

It is further to be noted that, due to the fact that whilst tuning offset, gain or phase the signal generator MODU has to produce predetermined modulating signals, such tuning can only be performed during a time slot in which the modulator is idle. This tuning may moreover not be performed in any idle time slot since the above also implies that during such tuning radiofrequent signals are transmitted by the antenna which is normally forbidden. CS has therefore to be conceived in such a way that the above constraints are not violated. If for instance no time slot is available in which the tuning can be performed, the modulator can still be tuned during operation if the antenna is replaced with an equivalent load in which the radiofrequent signals are absorbed. Such a load, e.g. an appropriate stub, can be provided either separately so that the user can mount and dismount it when required or it can be provided within the terminal and switched on and off automatically. A further possibility is after its manufacture or reparation when the modulator is also shielded from the communication system itself. In all of the above cases CS can be so determined that the tuning is performed only when the modulator is shielded from the communication system.

The operation of the various control loops briefly considered above will be described hereafter in some detail.

The power control loop is needed to comply with the GSM standard which specifies a 0.5 dB accuracy for the output power. Due to tolerances on the battery supply voltages and temperature effects changing the gain of the power amplifier such accuracy cannot be achieved in open-loop configuration Moreover, the above standard further specifies a specific ramp-up and ramp-down behaviour for the transmitted power which is equally unfeasible in open-loop configuration.

The GSM standard can hence only be upheld if some negative feedback power control loop monitors and adjusts the output power level. COMP thereto retrieves during every transmit burst and under the control of CS, as explained above, a digital representation of the required shape of the transmitted power, e.g. a raised cosine shape followed by a constant digital signal level indicative of the required final output power level and compares this with a digital representation of the power measurement value DP. The error signal which results from this comparison is converted to an analog power adjustment error signal POA and thus closes the power loop.

It is to be noted that the transfer functions of the constituent building blocks of this power loop are not described here. They must be so designed that the stability and performance correspond to the system requirements and such a design falls within the capabilities of a person skilled in the art.

The control loops described hereafter and sharing most of their hardware except their regulation circuits with the power control loop are concerned with keeping the composition of the modulated output signal OUT close to an ideal composition. This involves for the present modulator producing a GMSK modulated signal rejection of any pure carrier signal in the output signal OUT and suppression of one of the sidebands created by the multiplication in IM and QM, the latter suppression being commonly known as image rejection where the image refers to the suppressed sideband.

This requires that the characteristics of the transfer functions of the in-phase and quadrature-phase modulator circuit IPM and QPM respectively have to be made observable in the power measurement value DP. This can only be done by applying a suitable predetermined set of modulating signals I and Q to IPM and QPM respectively. Such sets are described hereafter with reference to the specific operation of each control loop and clearly require this tuning to be done off-line as described above.

When, as described above, it is allowed to tune the modulator to achieve a better carrier and image rejection, CS will initiate the tuning procedure by controlling COMP and MODU to perform first the offset cancellation associated with the mentioned second and third negative feedback control loops. This cancellation aims to improve the carrier rejection since any DC offset in the signals I3 and Q3 is multiplied with one of the carrier signals at the carrier frequency and in this way causes an undesirable carrier signal to be present within the modulated output signal OUT. Therefore also the latter control loops are configured as nulling loops, i.e. COMP, under control of CS, considers a reference value which is zero. At the same time CS controls MODU in such a way that it applies zero signals on I and Q for the whole duration of the offset nulling sequence. It can indeed be easily verified that with such a predetermined set of modulating signals the power measurement value DP is a measure of the offset generated by both IPM and QPM. Since the reference value is zero, the above power measurement value can directly be used as a measure for the offset regulating error signals IOAS or QOAS.

Again the constituent building blocks of these control loops will not be described in detail as they relate to design trade-offs which can be made by persons skilled in the art. However the aspects of the nulling sequence itself will be described hereafter since a gain in accuracy can be achieved by the preferred nulling sequence described hereafter.

The power measurement value DP always contains the offset contributions of both IPM and QPM and these can only be cancelled independently from each other. It can then be verified that the above mentioned gain in accuracy is achieved if CS controls COMP in such a way that the second and third control loops are activated alternately. Indeed, the accuracy of cancelling the offset generated by one of the modulator circuits is limited by the amount of offset generated by the other modulator circuit due to the fact that, if the latter dominates the former, no further significant improvement can be obtained. However by alternating to the other control loop at the moment that such domination takes place, e.g. when further correction only leads to an increase in the total power measurement value DP, the absolute precision of both control loops can be improved without improving their relative precision.

When the above offset cancellation is sufficient, i.e. the offset regulating error signals IOAS/QOAS fall within predetermined bounds, CS will control COMP and MODU to cooperate in tuning the gain via the mentioned fourth negative feedback control loop. This tuning partly improves the image rejection of the modulator. Indeed, such image rejection relies on the fact that the outputs of the two modulator circuit I3 and Q3 are such that all signals in one of their sidebands have equal amplitude but are of opposite sign. In the GMSK-case, the requirement for equal amplitudes can be achieved if the total gain in both modulator circuits equal. To this end fourth control loop adjusts the gain of one building block, i.e. the amplifier QA, of QPM so that the total gain of QPM substantially equals that of IPM. Again it is only necessary to describe for the skilled person the specific sequence of operations needed to arrive at such a desired gain adjustment.

The gain adjustment as described above clearly needs as a parameter the actual gain of IPM or rather a power value indicative of this actual gain. Therefore, each gain adjustment is preceded by a measuring step of this gain. This is achieved by controlling MODU via CS to generate a predetermined set of modulating signals I and Q consisting of a fixed amplitude DC signal on I and a zero signal on Q. The power measurement value DP corresponding to this predetermined set is clearly indicative of the gain of IPM and this power measurement value is therefore stored in the above mentioned associated memory of COMP to be used later as a reference value for the fourth control loop.

In a following step CS controls MODU to generate another predetermined set of modulating signals now consisting of a zero signal I and a fixed amplitude DC signal Q equal to the former DC signal on Q. CS will further control COMP to close the gain loop so as to adjust the gain of QA until DP substantially equals the gain reference value, i.e. the gain regulating error value GAS is a function of the difference between the above defined reference value and the power measurement value DP. The above is clearly equivalent to adjusting the gain until the total gain of QPM substantially equals that of IPM.

It is to be noted that, alternatively to the above preferred gain adjustment sequence, a sequence adjusting both the gain of IA and QA equivalent to the offset nulling sequence is equally feasible.

When the gain error signal GAS is sufficiently small, CS will activate, through its control over MODU and COMP, the fifth control loop adjusting the phase shift between the carrier signals IS and QS generated by QGM. This phase loop further improves the image rejection and is more particularly concerned with the above mentioned requirement that in one of the frequency bands of I3 and Q3 the signals should be of opposite sign. As can be verified from the GMSK specifications this opposite sign requires both the signals I2 and Q2 and the signals IS and QS to display a phase shift of exactly 90 degrees. The dominant factor in a lack of image rejection due to phase shifts not equalling 90 degrees is the phase mismatch between IS and QS. This is because it is very hard to design a quadrature signal generation means QGM ensuring a phase shift of exactly 90 degrees. The fifth control loop is concerned only with this latter phase shift so improving to a large extent the image rejection of the modulator.

This control loop is further characterized in that the measurement of the phase mismatch and the method of alleviating it are inventive as such and that the way in which the adjustment can be done directly via QGM requires a quadrature signal generation means which also involves an inventive step as such. In the following the above aspects of this fifth control loop will therefore be described in more detail whilst the design of all other characteristics of this phase loop again lies within the capabilities of a person skilled in the art.

For this control loop it is once more important to make the mentioned phase shift observable in the power measurement value DP. This is done by controlling MODU via CS to apply a predetermined set of modulating signals on I and Q consisting of signals which absolute values are substantially equal, for instance sinusoidal signals with equal frequencies but shifted in phase over an integer multiple of 180 degrees or DC signals with equal amplitudes. In this way the modulated signal MS will be an amplitude modulated signal as described hereafter firstly for a set of equal signals, i.e. equal amplitudes and same sign.

In this case and providing that the offset is cancelled and that the gain is balanced the signals I2 and Q2 at the inputs of the multipliers IM and QM are identical and the operation of these multipliers and the adder circuit SM will lead to a modulated output signal MS of the following form:

$$MS = I2^*IS + Q2^*QS$$
$$MS = I2^*[IS + QS]$$
$$MS = I2[\cos(\omega_c t) + \sin(\omega_c t + \Delta)]$$

wherein due to the above choice for I and Q the first term is common to both terms in the sum, wherein $\omega_c$ is the carrier signal angular frequency and wherein $\Delta$ is the mentioned phase mismatch. Indeed, if QGM would generate IS and QS in perfect quadrature, $\Delta$ would be zero. The purpose of the control loop is therefore the cancellation of $\Delta$. Since the phase shift initially is already adapted to provide carrier signals which are substantially in quadrature without any tuning, $\Delta$ will be relatively small and will throughout the following be considered as small.

The above formulas clearly indicate that MS is in this way an amplitude modulated signal corresponding to amplitude modulation of I2 or Q2 with a sinusoidal carrier signal of frequency $\omega_c$. Simple trigonometry allows us to rearrange the latter formula in the following way:

$$MS = 2 * I2 * \cos\left(\omega_c + \frac{\Delta - 90^\circ}{2}\right) * \cos\left(\frac{90^\circ - \Delta}{2}\right)$$

wherein the last factor is the most important one. Indeed, the other factors in the above formula indicate the amplitude modulation as such and their power is independent from the phase mismatch, whereas this last factor indicates that the peak amplitude and hence the power of the modulated output signal MS is dependent upon this phase mismatch. As mentioned above the power measurement circuit PD is in the present embodiment a simple peak detector and the power measurement value DP provided by it is therefore a direct function of the phase mismatch, as is required in order to implement the phase loop.

From the last formula it follows more specifically that if $\Delta$ equals zero the mentioned peak amplitude is the square root of 2 and the phase loop thus has to be so configured that the phase shift is tuned to yield such a peak amplitude.

Advantageously, the preferred phase tuning sequence does not take into account only this one measurement but further also uses another predetermined set of modulating signals which consists of the above described signals, one of which has its sign inverted. In the present case this further predetermined set thus consists for instance of sinusoids of same amplitude and frequency as in the previous set but now displaying a phase shift of 180 degrees or DC signals with same amplitude but of opposite sign. The latter modulating signals lead to a modulated signal MS and a corresponding power measurement value DP of the same type as derived above but wherein the phase mismatch causes the peak amplitude to deviate in the other direction with respect to the first mentioned predetermined set, as can be easily verified from the following formulas applicable to the modulated signal which results from the application of the last mentioned predetermined set.

$$MS = I2^*IS + Q2^*QS$$

$MS = I2^*[IS\text{-}QS]$

$MS = I2[\cos(\omega_c t)\text{-}\sin(\omega_c t + \Delta)]$

$$MS = 2 * I2 * \cos\left(\omega_c + \frac{\Delta - 90°}{2}\right) * \cos\left(\frac{90° + \Delta}{2}\right)$$

With these two predetermined sets it can be easily verified that the following preferred tuning sequence achieves the desired result. This sequence, under control of the control signal CS, starts with the generation by MODU of either one of the above sets and the storing of the resulting power measurement value DP by COMP in its memory. CS then controls MODU in a next step to generate the other set of modulating signals and controls COMP to activate the phase loop by determining the phase regulating error signal PAS as a function of the difference between a reference value, which is the power measurement value stored by COMP at the end of the previous step, and the present power measurement value DP. The above procedure can thereafter be iterated each time using as reference value the power measurement value measured in a previous step for the other set of modulating signals.

With the above procedure it is avoided that a reference value has to be provided for which the power measurement value corresponding to a phase shift of exactly 90 degrees has to be calculated. This procedure is much simpler then such a procedure using a calculated reference value since the nature of the two predetermined sets is such that this procedure naturally leads to an equalization of the power measurement value DP in both cases. As mentioned above, this is equivalent to a phase shift of 90 degrees. Moreover is the accuracy of the phase loop further improved due to the fact that no calculated reference value is needed and hence also that the exact characteristics of the power amplifier PA and power measurement circuit PD, which are very hard to retrieve accurately, need not be known.

It is to be noted that the offset and gain control loops also do not need the exact characteristics of PA and PD to be known since these loops respectively perform a nulling sequence and a balancing of two gain paths. It is therefore one of the great advantages of the present modulator that the use of the power amplifier PA and power measurement circuit PD in the negative feedback control loops does not lead to any constraints thereon. Indeed, any basic functionality of these blocks as required by the power loop suffices so that they can be chosen to optimize the operation of this important power loop.

With reference to Fig. 2 the quadrature signal generation means QGM will now be described in detail.

QGM includes a local oscillator LO producing a master carrier signal CS at the desired carrier frequency which is the input from which the mentioned quadrature carrier signals IS and QS are derived. CS is thereto applied to two similar branches of QGM each including a passive filter, CRQ and RCI respectively, an adjust amplifier, QAA and IAA respectively, and an adjust summing device, QAS and IAS respectively, which outputs are the mentioned respective carrier signals QS and IS.

QGM has as a further input the phase adjust signal PAS which is also applied to two similar branches each including an adjust multiplier, QAM and IAM respectively, which outputs are applied as second inputs to the summing devices QAS and IAS respectively and each of which has a second input to which the output of respectively CRQ and RCI is applied.

It is to be noted that the advantageous properties of QGM derive from the fact that the outputs of CRQ and RCI are cross-wise applied to the summing devices CSI and CSQ respectively and that the mentioned filters CRQ and RCI respectively provide for a phase lag and a phase lead of approximately 45 degrees.

It can be seen that for instance, due to the addition via QAS, QS will be composed of a first amplified signal and a signal corresponding to the output of RCI. The latter two signals are approximately orthogonal due to the filters CRQ and RCI and due to the fact that PAS is a DC signal so that neither the phase nor the frequency of the output of RCI are affected in the adjust multiplier QAM. The latter multiplier indeed acts as an amplifier in response to the DC phase adjust signal PAS which changes only the sign and amplitude of the output of CRQ dependent upon the sign and amplitude of PAS.

Therefore, the output signal of QAM can be viewed as a correction signal within QS. this correction signal is indeed relatively small due to the fact that it is not expressly amplified and is very well suited to adjust the phase of the quadrature-phase sinusoid QS. The latter signal is indeed much smaller than the mentioned first amplified signal only very slightly changing its amplitude whilst the approximate orthogonality between these summed signals leads to the fact that a maximal phase adjust can be reached for a small correction signal with as little effect on the amplitude of QS as possible.

Clearly, the amplitude and the sign of the correction signal and therefore also the extent and direction of the phase adjustment are directly dependent upon the amplitude and sign of the phase adjust signal PAS. The above description is also valid for the in-phase sinusoid IS by simply replacing each term with its dual term of Fig. 2.

It can then be said that the DC phase adjust signal PAS because it is supplied to adjust simultaneously IS and QS serves dependent upon its sign to open up or close the phase shift between IS and QS which has to be adjusted and dependent upon its amplitude the extent of such an adjustment. It can also be appreciated that the above described QGM can advantageously be used in the last described feedback circuit in order to tune this phase shift to substantially 90 degrees.

An alternative way of producing the required phase shift is by mounting a phase adjustment device (not shown) after the signal generator MODU which changes the modulating signals applied to IPM and QPM. Such a device performs a transformation of the outputs of MODU according to the following formula wherein I and Q are the inputs to the device and I' and Q' are its outputs:

$$\begin{bmatrix} I' \\ Q' \end{bmatrix} = \begin{bmatrix} \cos\phi & \sin\phi \\ \sin\phi & \cos\phi \end{bmatrix} \begin{bmatrix} I \\ Q \end{bmatrix}$$

The angle $\phi$ can be used to adjust the phase shift between two substantially orthogonal I and Q signals and such a phase adjustment is fully equivalent to the phase adjustment performed directly on IS and QS described above with reference to QGM. The above described device however verifiably has output signals I' and Q' which are equal and respectively of the same or opposite sign if its input signals I and Q are equal and respectively of the same or opposite sign. This is a necessary condition in order for such a device to be compatible with the present tuning scheme since the above scheme requires that sets of signals with equal absolute values be applied to IPM and QPM.

In order for the tuning procedure as described above to operate it is further necessary that the angle $\phi$, which in fact plays the role of the phase regulating signal PAS, be observable in the power measurement value so that this angle may be modified in order to make this value equal for the above described two sets. With the above device this is also the case as will be explained in the following.

In applying equal I and Q signals of the same sign to the adjustment device the following outputs will be obtained:

$I' = Q' = I(\cos\phi + \sin\phi)$

In applying equal I and Q signals of the opposite sign to the adjustment device the following outputs will correspondingly be obtained:

$I' = -Q' = I(\cos\phi - \sin\phi)$

From the last two formulas it follows that whilst the adjustment device preserves the basic properties of sets of signals having equal absolute values, it also modulates, dependent upon the value of $\phi$, their respective amplitudes in different directions. Indeed, for an angle between 0 and 90 degrees a set with matching sign will be forwarded with a larger amplitude whilst a set with opposite signs will be forwarded with smaller amplitude. It can hence be appreciated that the angle $\phi$ can be used, as the above described phase regulating signal PAS, to tune the power measurement value DP in response of the two different sets to be equal.

Finally, it can also be verified that $\phi$ with the above procedure converges to a value of $\Delta/2$ wherein $\Delta$ is the above mentioned phase mismatch between the two sinusoidal carrier signals IS and QS and that the introduction of such an angle in the adjustment device is equivalent to the above described direct tuning via the phase regulating error signal PAS and quadrature signal generation means QGM.

It is finally to be noted that the latter adjustment device is to be preferred when the derivation of the carrier signals IS and QS in quadrature is more precise if the possibility to tune their relative phase shift directly via QGM as described previously is omitted.

While the principles of the invention have been described above in connection with specific apparatus, it is to be clearly understood that this description is made only by way of example and not as a limitation on the scope of the invention.

**Claims**

1. Modulator with a modulator input (IN) to which an input signal (IN) is applied and with a modulator output (OUT) on which a modulated output signal (MS,OUT) is provided, said modulator including:
   - a signal generator (MODU) generating from said input signal a plurality of modulating signals (I, Q),
   - a modulator arrangement (IPM, QPM, SM, QGM) with a plurality of modulator circuits (IPM, QPM) and an adder circuit (SM), said modulator circuits modulating respective ones of said modulating signals on respective carrier signals (IS, QS) thereby producing modulated intermediate signals (I3, Q3), said adder circuit adding said intermediate signals thereby producing said modulated output signal, and,
   - at least one negative feedback control loop (PD; COMP; ISD/QSD/QA/QGM) including between said modulator output and a regulating input thereof a power measurement circuit (PD) providing a power measurement value (DP) and a comparator means (COMP) for comparing said power measurement value with a reference value and providing a regulating error signal (GAS, IOAS, QOAS, PAS, POA) on said regulating input,
   characterized in that said signal generator (MODU) is controlled (CS) so as to produce at least one predetermined set of modulating signals (I, Q) which give rise in said modulator to a power measurement value (DP) which is function of a corresponding tunable characteristic of the transfer function of at least one of said modulator circuits (IPM, QPM) and that said regulating input (GAS, IOAS, QOAS, PAS, POA) is coupled to a regulating means (ISD/QSD/QA/QGM) forming part of said one modulator circuit to tune said characteristic of the transfer function thereof to said reference value.

2. Modulator according to claim 1, characterized in that said plurality of modulator circuits comprises an in-phase and a quadrature-phase modulator circuit, that said plurality of modulating signals (I, Q) comprises an in-phase (I) and a quadrature-phase (Q) modulating signal which are applied to said in-phase (IPM) and said quadrature-phase (QPM) modulator circuit respectively.

3. Modulator according to claim 1, characterized in that said predetermined set consists of zero modulating signals (I,Q) which give rise to a power measurement value (DP) which is a function of the offset characteristic of the transfer function of said one modulator circuit (IPM) and that said regulating input is coupled to a summing circuit (ISD) forming part of said one modulator circuit, said summing circuit forming part of said regulating means and being used to add an offset regulating error signal (IOAS), provided by said control loop (PD; COMP; ISD/QSD/QA/QGM) on said regulating input and based on a zero reference value, to a signal produced in said one modulator circuit.

4. Modulator according to claims 2 & 3, characterized in that a second predetermined set also consists of zero modulating signals (I,Q) which give rise to a power measurement value (DP) which is a function of the offset characteristic of the transfer function of the other modulator circuit (QPM) and that said regulating means (ISD/QSD/QA/QGM) further includes a second summing circuit (QSD) which forms part of said other modulator circuit (QPM) and to which a second regulating input is coupled, said second summing circuit being used to add a second regulating error signal (QOAS), provided by said control loop (PD; COMP; ISD/QSD/QA/QGM) on said second regulating input, and based on a zero reference value, to a signal produced in said other modulator circuit.

5. Modulator according to claim 4, characterized in that said control loop (PD; COMP; ISD/QSD/QA/QGM) is controlled to alternately tune the transfer function of said in-phase (IPM) and quadrature-phase (QPM) modulator circuits via said first (ISD) and second (QSD) summing circuits respectively, and that said control loop is controlled to tune another transfer function whenever said power measurement value (DP) increases with an increase in the amplitude of the presently considered offset regulating error signal (IOAS/QOAS).

6. Modulator according to claim 1, characterized in that said predetermined set consists of a fixed amplitude signal (Q) applied to said one modulator circuit (QPM) and zero signals (I) applied to other modulator circuits (IPM) and gives rise to a power measurement value (DP) which is a function of the gain characteristic of the transfer function of said one modulator circuit and that said regulating input is coupled to a gain adjustment circuit (QA) included in said regulating means (ISD/QSD/QA/QGM) being used to adjust the gain of an amplifier (QA) included in said one modulator circuit via a gain regulating error signal (GAS), provided by said control loop (PD; COMP; ISD/QSD/QA/QGM) on said regulating input and based on a reference value corresponding to the power measurement value (DP) corresponding to said fixed amplitude signal and a desired gain.

7. Modulator according to claims 2 & 6, characterized in that said modulator is adapted to measure said desired gain as said power measurement value (DP) in response to a set of modulating signals consisting of said fixed amplitude signal applied to the other modulator circuit (IPM) and a zero signal applied to said one modulator circuit (QPM), and that said fixed amplitude signal is a DC-signal.

8. Modulator according to claim 2, characterized in that said in-phase (IPM) and quadrature-phase (QPM) modulator circuits each include multiplier means (IM; QM) for multiplying their respective input signals (I2; Q2) with an in-phase and quadrature-phase carrier signal (IS, QS) respectively, said carrier signals having a same carrier frequency and a mutual phase shift of substantially 90 degrees, and that said predetermined set consists of modulating signals (I,Q) having equal absolute values and gives rise to a power measurement value (DP) which is a function of the mutual phase shift characteristic of the transfer function of both said modulator circuits and that said regulating input is coupled to a phase adjustment circuit (QGM) forming part of said regulating means (ISD/QSD/QA/QGM) and being used to change said mutual phase shift via a phase regulating error signal (PAS), provided by said control loop.

9. Modulator according to claim 8, characterized in that said modulating signals are alternately controlled to equal said last mentioned predetermined set and a further predetermined set in which one of the signals of said last mentioned predetermined set has its sign inverted, and that said reference value is said power measurement value (DP) at the end of a previous alternation.

10. Modulator according to claim 1, characterized in that said power measurement circuit (PD) is at least shared among a power control loop adjusting the gain of a power amplifier (PA) amplifying said modulated signal (MS) and said negative feedback control loop.

11. Modulator according to claims 4, 6, 8 and 10, characterized in that said modulator generates a control signal (CS) controlling said negative feedback control loop (PD; COMP; ISD/QSD/QA/QGM) and said signal generator (MODU) to cooperate in tuning first said offset, then said gain and finally said phase shift in a time slot wherein said modulator is idle, and that said control signal activates said power control loop during transmit bursts.

12. Quadrature signal generation means (QGM) adapted to be used in a modulator according to claim 8 or 9 and deriving said carrier signals (IS, QS) from a master carrier signal (CS), having said carrier frequency, by applying said master signal to two parallel branches, a first branch including an in-phase filter (IRC) and amplifier (IAA) deriving a first amplified signal substantially shifted over 45 degrees and a second branch including a quadrature-phase filter (QCR) and amplifier (QAA) deriving a second amplified signal substantially shifted over -45 degrees, characterized in that said quadrature signal generation means (QGM) further includes an in-phase (IAS) and a quadrature-phase (QAS) adjust summing circuit for adding respectively said first amplified signal with a first signal dependent upon said phase adjust signal (PAS) and the output of said quadrature-phase filter (CR) and said second amplified signal with a second signal dependent upon said phase adjust signal (PAS) and the output of said in-phase filter (RC), and that said in-phase and quadrature phase carrier signals (IS, QS) are the outputs of said in-phase and quadrature-phase adjust summing circuits (IAS, QAS) respectively.

13. Quadrature signal generation means according to claim 10, characterized in that said first and second signals are derived by in-phase (IAM) and quadrature-phase (QAM) adjust mixers to which said phase adjust signal (PAS) and a respective one of said filter output signals are applied.

FIG. 1

EP 0 608 577 A1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | ELECTRONICS LETTERS<br>vol. 27, no. 31, January 1991, ENAGE GB<br>pages 214 - 216<br>FAULKNER ET AL. 'Automatic adjustment of quadrature modulators'<br>* abstract; figure 2 *<br>* page 215, left column, paragraph 2 -paragraph 5 * | 1-13 | H04L27/20 |
| X | EP-A-0 379 1I4 (ALCATEL)<br>* abstract; figure 2 *<br>* page 3, line 7 - line 11 *<br>* figure 4 * | 1-13 | |
| A | US-A-4 930 141 (OHMAGARI)<br>* abstract; figures 4,5 * | 1 | |
| | | | **TECHNICAL FIELDS SEARCHED (Int. Cl.5 )**<br><br>H04L<br>H03L |

The present search report has been drawn up for all claims

| Place of search | Date of completion of the search | Examiner |
|---|---|---|
| THE HAGUE | 19 MAY 1993 | SCRIVEN P. |

EPO FORM 1503 03.82 (P0401)